# EUROPEAN PATENT APPLICATION

(11) **EP 4 823 021 A1**
(43) Date of publication of application: **14.10.2026**
(21) Application number: 23960555.3
(22) Date of filing: 07.12.2023
(51) Int. Cl.: H04L 5/00

(54) **CHANNEL STATE INFORMATION REPORTING METHOD, TERMINAL, NETWORK DEVICE, AND COMMUNICATION SYSTEM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2023/137124
(87) International publication number: WO 2025/118243

(57) **Abstract**

The present disclosure relates to a channel state information reporting method, a terminal, a network device, and a communication system. The channel state information reporting method comprises: acquiring a first reference signal resource; on the basis of the first reference signal resource, performing measurement so as to acquire first channel state information; and reporting the first channel state information, the first channel state information comprising time difference information, and the time difference information indicating a time difference between when channel state information reference signals on different reference signal resources reach a terminal. By means of embodiments of the present disclosure, the time difference of multi-TRP joint transmission can be determined, so that the performance of joint transmission of a plurality of TRPs is ensured.

## Description

### TECHNICAL FIELD

The disclosure relates to the field of communication technology, and in particular to a method for reporting channel state information (CSI), a terminal, a network device, and a communication system.

### BACKGROUND

In a case that multi-transmission reception points (TRP) performs coherent joint transmission (CJT), transmissions from the multi-TRP may arrive at a terminal simultaneously, or arrival time differences of the multi-TRP are within a certain time threshold, thus ensuring that the terminal receives data sent by the multi-TRP.

### SUMMARY

In a case that multi-transmission reception points (TRP) performs coherent joint transmission (CJT), how to ensure the performance of multi-TRP joint transmission is a problem to be solved.

Embodiments of the disclosure provide a method for reporting channel state information (CSI), a terminal, a network device, and a communication system.

According to a first aspect of the embodiments of the disclosure, a method for reporting CSI is provided. The method is performed by a terminal, including: obtaining a first reference signal resource; obtaining first CSI by performing measurement based on the first reference signal resource; and reporting the first CSI, in which the first CSI includes time difference information, and the time difference information indicates a time difference between arrivals of CSI reference signals (CSI-RSs) on different reference signal resources at the terminal.

According to a second aspect of the embodiments of the disclosure, a method for reporting CSI is provided. The method is performed by a network device, including: sending configuration information of a first reference signal resource, in which the configuration information of the first reference signal resource is used to configure a first reference signal resource for a terminal; and obtaining first CSI, in which the first CSI is measured and reported by the terminal based on the first reference signal resource, in which the first CSI includes time difference information, and the time difference information indicates a time difference between arrivals of CSI-RSs on different reference signal resources at the terminal.

According to a third aspect of the embodiments of the disclosure, a method for reporting CSI is provided. The method includes: sending, by a network device, configuration information of a first reference signal resource, in which the configuration information of the first reference signal resource is used to configure a first reference signal resource for a terminal; obtaining, by the terminal, first CSI by performing measurement based on the first reference signal resource, and reporting the first CSI, in which the first CSI includes time difference information, and the time difference information indicates a time difference between arrivals of CSI-RSs on different reference signal resources at the terminal; and obtaining, by the network device, the first CSI.

According to a fourth aspect of the embodiments of the disclosure, a terminal is provided. The terminal includes: a transceiver module, configured to obtain a first reference signal resource sent by a network device; a processing module, configured to obtain first CSI by performing measurement based on the first reference signal resource, and report the first CSI, in which the first CSI includes time difference information, and the time difference information indicates a time difference between arrivals of CSI-RSs on different reference signal resources at the terminal.

According to a fifth aspect of the embodiments of the disclosure, a network device is provided. The network device includes: a transceiver module, configured to send configuration information of a first reference signal resource, in which the configuration information of the first reference signal resource is used to configure a first reference signal resource for a terminal, in which the transceiver module is further configured to obtain first CSI, in which the first CSI is measured and reported by the terminal based on the first reference signal resource, in which the first CSI includes time difference information, and the time difference information indicates a time difference between arrivals of CSI-RSs on different reference signal resources at the terminal.

According to a sixth aspect of the embodiments of the disclosure, a terminal is provided. The terminal includes: one or more processors, in which the terminal is configured to implement the method according to the first aspect.

According to a seventh aspect of the embodiments of the disclosure, a network device is provided. The network device includes: one or more processors, in which the network device is configured to implement the method according to the second aspect.

According to an eighth aspect of the embodiments of the disclosure, a communication system is provided. The communication system includes: a terminal, configured to implement the method according to the first aspect, and a network device, configured to implement the method according to the second aspect.

According to a ninth aspect of the embodiments of the disclosure, a storage medium is provided. The storage medium stores instructions, in which the instructions, when executed on a communication device, cause the communication device to implement any one of the method according to the first aspect or the second aspect.

Through the embodiments of the disclosure, a time difference of multi-TRP joint transmission may be determined, thus ensuring the performance of the multi-TRP joint transmission.

### BRIEF DESCRIPTION OF THE DRAWINGS

In order to more clearly illustrate technical solutions in the embodiments of the disclosure, the figures for describing the embodiments are introduced below. The following figures are merely some embodiments of the disclosure and do not specifically limit the scope of protection of the disclosure.
FIG. 1 is a schematic diagram illustrating an architecture of a communication system according to an embodiment of the disclosure.
FIG. 2 is an interaction diagram illustrating a method for reporting channel state information (CSI) according to an embodiment of the disclosure.
FIG. 3A is a flowchart illustrating a method for reporting CSI according to an embodiment of the disclosure.
FIG. 3B is a flowchart illustrating a method for reporting CSI according to an embodiment of the disclosure.
FIG. 3C is a flowchart illustrating a method for reporting CSI according to an embodiment of the disclosure.
FIG. 4 is a flowchart illustrating a method for reporting CSI according to an embodiment of the disclosure.
FIG. 5 is an interaction diagram illustrating a method for reporting CSI according to an embodiment of the disclosure.
FIG. 6A is a block diagram illustrating a terminal according to an embodiment of the disclosure.
FIG. 6B is a block diagram illustrating a network device according to an embodiment of the disclosure.
FIG. 7A is a block diagram illustrating a communication device according to an embodiment of the disclosure.
FIG. 7B is a block diagram illustrating a chip according to an embodiment of the disclosure.

### DETAILED DESCRIPTION

Embodiments of the disclosure provide a method for reporting channel state information (CSI), a terminal, a network device, and a communication system.

In a first aspect, embodiments of the disclosure provide a method for reporting CSI. The method is performed by a terminal, including: obtaining a first reference signal resource; obtaining first CSI by performing measurement based on the first reference signal resource; and reporting the first CSI, in which the first CSI includes time difference information, and the time difference information indicates a time difference between arrivals of CSI-RSs on different reference signal resources at the terminal.

In the above embodiments, the first reference signal resource includes a channel measurement resource (CMR), and the CMR includes a plurality of reference signal resources; the time difference information indicates a time difference between arrivals of a reference signal on a second reference signal resource and a reference signal on a third reference signal resource at the terminal, in which the third reference signal resource is a reference signal resource among the plurality of reference signal resources, and the second reference signal resource is another reference signal resource other than the third reference signal resource among the plurality of reference signal resources.

In some embodiments in combination with the first aspect, in some embodiments, the first reference signal resource includes a CMR, and the CMR includes a plurality of reference signal resources; the time difference information indicates a time difference between arrivals of a reference signal on a second reference signal resource and a reference signal on a third reference signal resource at the terminal, in which the third reference signal resource is a reference signal resource among the plurality of reference signal resources, and the second reference signal resource is another reference signal resource other than the third reference signal resource among the plurality of reference signal resources.

In the above embodiments, a reference signal resource is selected among the plurality of reference signal resources as a reference, and based on the reference, a time difference of arrivals of reference signals corresponding to other reference signal resources relative to the reference signal resource is compared, thus the terminal obtains the time difference between arrivals of channel reference signals on different reference signal resources.

In some embodiments in combination with the first aspect, in some embodiments, the third reference signal resource is determined by using at least one of: determining, based on first indication information sent by a network device, the third reference signal resource among the plurality of reference signal resources, in which the first indication information indicates the third reference signal resource; determining a reference signal resource with a smallest reference signal resource identifier among the plurality of reference signal resources as the third reference signal resource; or determining a reference signal resource corresponding to a first reference signal as the third reference signal resource, in which the first reference signal is an earliest arrived CSI-RS.

In the above embodiments, the manner of determining the third reference signal resource used as a reference is specified. The third reference signal resource used as a reference may be determined based on an indication from a base station or based on measurement performed by the terminal, which may avoid abnormality in subsequently obtaining a time difference result due to unclear manner of determining the third reference signal resource, thus ensuring the performance of multi-transmission reception point (TRP) joint transmission.

In some embodiments in combination with the first aspect, in some embodiments, the time difference includes: a time interval between time domain positions corresponding to different CSI-RSs, and the time domain position includes at least one of: a slot position or a symbol position; or the time difference does not include a time interval between time domain positions corresponding to different CSI-RSs.

In the above embodiments, by defining the time difference from a time domain position dimension and other dimensions, the solution may obtain features indicating the time difference from multiple dimensions, thus making the solution more complete and having a wider application range.

In some embodiments in combination with the first aspect, in some embodiments, reporting the first CSI includes at least one of: reporting the time difference information; or reporting a code point, in which a first mapping relationship exists between the code point and the time difference information.

In some embodiments in combination with the first aspect, in some embodiments, the method further includes: receiving second indication information sent by a network device, in which the second indication information indicates the first mapping relationship.

In some embodiments in combination with the first aspect, in some embodiments, the first mapping relationship is configured based on at least one of: a cyclic prefix (CP) length, in which different CP lengths correspond to different first mapping relationships; or a subcarrier spacing (SCS), in which different SCSs correspond to different first mapping relationships.

In the above embodiments, the solution may have corresponding mapping relationships in scenarios of different CP lengths and different SCSs, thus making the application scenarios of the solution more extensive and the communication system more stable.

In some embodiments in combination with the first aspect, in some embodiments, the first CSI and other CSI are included in different CSI reports, and the other CSI includes at least one of: a channel quality indicator (CQI); a precoding matrix indicator (PMI); a rank indicator (RI); a CSI-RS resource indicator (CRI); a layer indicator (LI); a layer 1 reference signal received power (L1-RSRP); a layer 1 signal to interference plus noise ratio (L1-SINR); a Doppler shift; a Doppler spread; an average delay; a delay spread; or time domain channel properties (TDCP).

In the above embodiments, the first CSI may be reported separately, thus saving signaling overhead.

In some embodiments in combination with the first aspect, in some embodiments, the method further includes: receiving CSI report configuration information sent by a network device, in which the CSI report configuration information is used to configure the first CSI to include the time difference information.

In some embodiments in combination with the first aspect, in some embodiments, the first CSI is reported based on at least one of: periodic reporting, aperiodic reporting, or semi-persistent reporting.

In the above embodiments, the first CSI may be reported via a plurality of modes, thus improving the universality of the solution.

In some embodiments in combination with the first aspect, in some embodiments, a reporting mode of the first CSI includes at least one of: a single physical uplink control channel (PUCCH) transmission; a single physical uplink shared channel (PUSCH) transmission; a plurality of PUCCH transmissions; or a plurality of PUSCH transmissions.

In some embodiments in combination with the first aspect, in some embodiments, the first CSI further includes a third reference signal resource identifier.

In some embodiments in combination with the first aspect, in some embodiments, the first CSI further includes a second reference signal resource identifier; the second reference signal resource identifier and the time difference have a one-to-one correspondence relationship.

In a second aspect, the embodiments of the disclosure provide a method for reporting CSI. The method is performed by a network device, including: sending configuration information of a first reference signal resource, in which the configuration information of the first reference signal resource is used to configure a first reference signal resource for a terminal; and obtaining first CSI, in which the first CSI is measured and reported by the terminal based on the first reference signal resource, in which the first CSI includes time difference information, and the time difference information indicates a time difference between arrivals of CSI-RSs on different reference signal resources at the terminal.

In the above embodiments, the configuration information of the first reference signal resource is sent to the terminal so that the terminal performs measurement based on the first reference signal resource and reports the time difference between arrivals of channel reference signals on different reference signal resources at the terminal, thus the network device may adjust, based on the time difference reported by the terminal, arrival times/moments of CSI-RSs on different reference signal resources at the terminal, for example, adjusting sending times/moments of pieces/instances of information from the multi-TRP, thus arrival times/moments of the pieces/instances of information sent by different TRPs are within a cyclic prefix range, ensuring the performance of multi-TRP joint transmission.

In some embodiments in combination with the second aspect, in some embodiments, the first reference signal resource includes a CMR, and the CMR includes a plurality of reference signal resources; the time difference information indicates a time difference between arrivals of a reference signal on a second reference signal resource and a reference signal on a third reference signal resource at the terminal, in which the third reference signal resource is a reference signal resource among the plurality of reference signal resources, and the second reference signal resource is another reference signal resource other than the third reference signal resource among the plurality of reference signal resources.

In some embodiments in combination with the second aspect, in some embodiments, the third reference signal resource includes at least one of: a reference signal resource indicated by the first indication information sent by the network device; a reference signal resource with a smallest reference signal resource identifier among a plurality of reference signal resources; or a reference signal resource corresponding to a first reference signal, in which the first reference signal is an earliest arrived CSI-RS.

In some embodiments in combination with the second aspect, in some embodiments, the time difference includes: a time interval between time domain positions corresponding to different CSI-RSs, and the time domain position includes at least one of: a slot position or a symbol position; or the time difference does not include a time interval between time domain positions corresponding to different CSI-RSs.

In some embodiments in combination with the second aspect, in some embodiments, obtaining the first CSI by the network device includes at least one of: obtaining the time difference information; or obtaining a code point, in which a first mapping relationship exists between the code point and the time difference information.

In some embodiments in combination with the second aspect, in some embodiments, the method further includes: sending second indication information, in which the second indication information indicates the first mapping relationship.

In some embodiments in combination with the second aspect, in some embodiments, the first mapping relationship is configured based on at least one of: a CP length, in which different CP lengths correspond to different first mapping relationships; or an SCS, in which different SCSs correspond to different first mapping relationships.

In some embodiments in combination with the second aspect, in some embodiments, the first CSI and other CSI are included in different CSI reports, and the other CSI includes at least one of: a CQI; a PMI; an RI; a CRI; a LI; a L1-RSRP; a L1-SINR; a Doppler shift; a Doppler spread; an average delay; a delay spread; or TDCP.

In some embodiments in combination with the second aspect, in some embodiments, the method further includes: sending CSI report configuration information, in which the CSI report configuration information is used to configure the first CSI to include the time difference information.

In some embodiments in combination with the second aspect, in some embodiments, obtaining the first CSI by the network device is based on at least one of: periodic obtaining, aperiodic obtaining, or semi-persistent obtaining.

In some embodiments in combination with the second aspect, in some embodiments, obtaining the first CSI by the network device is based on at least one of: a single PUCCH transmission; a single PUSCH transmission; a plurality of PUCCH transmissions; or a plurality of PUSCH transmissions.

In some embodiments in combination with the second aspect, in some embodiments, the first CSI further includes a third reference signal resource identifier.

In some embodiments in combination with the second aspect, in some embodiments, the first CSI further includes a second reference signal resource identifier; the second reference signal resource identifier and the time difference have a one-to-one correspondence relationship.

In a third aspect, the embodiments of the disclosure provide a method for reporting CSI. The method includes: sending, by a network device, configuration information of a first reference signal resource, in which the configuration information of the first reference signal resource is used to configure a first reference signal resource for a terminal; obtaining, by the terminal, first CSI by performing measurement based on the first reference signal resource, and reporting the first CSI, in which the first CSI includes time difference information, and the time difference information indicates a time difference between arrivals of CSI-RSs on different reference signal resources at the terminal; and obtaining, by the network device, the first CSI.

In a fourth aspect, the embodiments of the disclosure provide a terminal. The terminal includes: a transceiver module, configured to obtain a first reference signal resource sent by a network device; a processing module, configured to obtain first CSI by performing measurement based on the first reference signal resource, and report the first CSI, in which the first CSI includes time difference information, and the time difference information indicates a time difference between arrivals of CSI-RSs on different reference signal resources at the terminal.

In a fifth aspect, the embodiments of the disclosure provide a network device. The network device includes: a transceiver module, configured to send configuration information of a first reference signal resource, in which the configuration information of the first reference signal resource is used to configure a first reference signal resource for a terminal, in which the transceiver module is further configured to obtain first CSI, in which the first CSI is measured and reported by the terminal based on the first reference signal resource, in which the first CSI includes time difference information, and the time difference information indicates a time difference between arrivals of CSI-RSs on different reference signal resources at the terminal.

In a sixth aspect, embodiments of the disclosure provide a terminal. The terminal may include one or more processors, in which the terminal may be configured to perform the method of first aspect.

In a seventh aspect, embodiments of the disclosure provide a network device. The network device may include one or more processors, in which the network device may be configured to perform the method of second aspect.

In an eighth aspect, embodiments of the disclosure provide a communication system. The communication system may include: a terminal, configured to perform the method of the first aspect, and a network device, configured to perform the method of the second aspect.

In a ninth aspect, embodiments of the disclosure provide a storage medium. The storage medium stores instructions which, when executed on a communication device, cause the communication device to perform the method of the first aspect or the method of the second aspect.

It may be understood that the terminal, the network device, the communication system, the storage medium, the program product, the computer program and the chip or the chip system are all used to implement the method in the embodiments of the disclosure. Thus, regarding beneficial effects they may achieve, reference may made be to the beneficial effects in the corresponding methods.

Embodiments of the disclosure provide a method for reporting CSI, a terminal, a network device, and a communication system. In some embodiments, terms such as "method for reporting CSI", "method for information processing", and "communication method" may be used interchangeably; terms such as "apparatus for reporting CSI", "apparatus for information processing", and "communication apparatus" may be used interchangeably; and terms such as "system for reporting CSI", and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined. In addition, the embodiments may be arbitrarily combined, for example, some or all steps of different embodiments may be arbitrarily combined, and a certain embodiment may be arbitrarily combined with optional implementations of other embodiments.

In the embodiments of the disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In some embodiments, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "time/frequency" and "time-frequency domain" refer to the time domain and/or the frequency domain.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced with the terminal. For example, the embodiments of the disclosure may also be applied to a structure in which communication between the access network device, the core network device, or the network device and the terminal is replaced with communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced with the language corresponding to the communication between the terminals (for example, "side"). For example, the uplink channel, the downlink channel, etc. may be replaced with the side channel or direct channel, and the uplink, the downlink, etc. may be replaced with a sidelink or a direct link.

In some embodiments, the terminal may be replaced with the access network device, the core network device, or the network device. In this case, the access network device, the core network device, or the network device may also be configured to have a structure that has all or part of functions of the terminal.

In some embodiments, the acquisition of data, information, etc. may comply with laws and regulations of the country to which the data is obtained.

In some embodiments, data, information, etc. may be obtained with consent from users.

In addition, each element, each row, or each column in the table of the embodiments of the disclosure may be implemented as an independent embodiment, and the combination of any elements, any rows, or any columns may also be implemented as an independent embodiment.

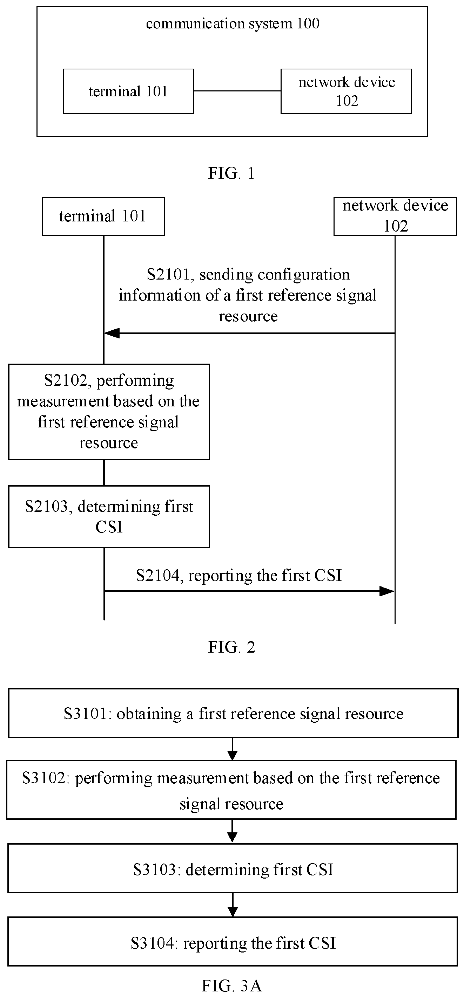

FIG. 1 is a schematic diagram illustrating an architecture of a communication system according to an embodiment of the disclosure.

As shown in FIG. 1, the communication system 100 may include a terminal 101 and a network device 102.

In some embodiments, the terminal 101 for example includes at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the network device may include at least one of: the access network device, or the core network device.

In some embodiments, the access network device is for example a node or device that accesses a terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the technical solution of the disclosure may be applicable to an Open RAN architecture. In this case, interfaces between or within the access network devices involved in embodiments of the disclosure may become internal interfaces of the Open RAN, and processes and information interactions between these internal interfaces may be implemented through software or programs.

In some embodiments, the access network device may include a central unit (CU) and distributed units (DUs), in which the CU may also be called a control unit. A protocol layer of the access network device may be divided by adopting the CU-DU structure. Part of functions of the protocol layer are centrally controlled by the CU, and part of or all of remaining functions of the protocol layer are distributed in the DUs which are centrally controlled by the CU, but is not limited herein.

In some embodiments, the core network device may be one device including one or more network elements, or may be a plurality of devices or a device group respectively including all or part of the one or more network elements. A network element may be virtual or physical. The core network for example includes at least one of an evolved packet core (EPC), a 5G core network (5GCN), or a next generation core (NGC).

It may be understood that the communication system described in the embodiments of the disclosure aims to more clearly illustrate the technical solutions of the embodiments of the disclosure, and does not constitute a limitation on the technical solutions provided in the embodiments of the disclosure. A person skilled in the art may know that with the evolution of the system architecture and the emergence of new service scenarios, the technical solution provided in the embodiments of the disclosure are also applicable to similar technical problems.

The following embodiments of the disclosure may be applied to the communication system 100 or part of the subjects shown in FIG. 1, but are not limited herein. The subjects shown in FIG. 1 are examples, and the communication system may include all or part of the subjects in FIG. 1, or may include other subjects than those shown in FIG. 1. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In R18, multi-transmission reception points (TRP) performs coherent joint transmission (CJT) is proposed. In a case that the multi-TRP performs the CJT, the multi-TRP may be ideally synchronized, and ideal backhaul links exist among the multi-TRP, thus it may be ensured that pieces of information sent by the multi-TRP arrive at the terminal simultaneously. Alternatively, a difference of the arrival times of the pieces of information sent by the multi-TRP is within a certain time threshold, for example, within a CP, thus it may be ensured that the terminal may simultaneously receive data sent by different TRPs.

It may be understood that, if time differences between arrivals of the multi-TRP at the terminal are relatively large (for example, arriving at different times or a time difference greater than a CP length), the terminal cannot simultaneously receive the pieces of information sent by different TRPs.

Based on this, embodiments of the disclosure provide a method for reporting CSI.

FIG. 2 is an interaction diagram illustrating a method for reporting CSI according to an embodiment of the disclosure. As shown in FIG. 2, embodiments of the disclosure relate to a method for reporting CSI. The above method includes the following steps S2101 to S2104.

At step S2101, a network device 102 sends configuration information of a first reference signal resource to a terminal 101.

In some embodiments, the terminal 101 obtains the first reference signal resource.

In some embodiments, the terminal 101 receives the first reference signal resource.

In some embodiments, the terminal 101 receives the first reference signal resource from the network device 102.

In some embodiments, there may be one or more first reference signal resources.

In some embodiments, the first reference signal resource includes a CMR.

Optionally, the first reference signal resource includes one CMR.

In some embodiments, one CMR includes a plurality of reference signal resources.

For example, one CMR includes a plurality of CSI-RS resources.

In summary, the network device may notify the terminal of a situation of a reference signal resource. For example, the network device may send one or more reference signal resources (reference signal resource configuration) to the terminal so that the terminal performs measurement on the reference signal resource(s), thus obtaining time difference information.

In some embodiments, the terms such as "send", "transmit", "report", "issue", "transmit", "bi-directionally transmit", "send and/or receive" or the like may be used interchangeably.

In some embodiments, "obtain", "acquire", "get", "receive", "transmit", "bidirectional transmission", "send and/or receive" may be interchangeable, and may be interpreted as many meanings such as receiving from other entities, obtaining from a protocol, obtaining from a higher layer, obtaining by self-processing, autonomous implementation, etc.

In some embodiments, the terminal 101 obtains the configuration information of the first reference signal resource sent by the network device 102, and configures the first reference signal resource based on the configuration information of the first reference signal resource, thus determining the first reference signal resource.

It should be understood that the terminal may also determine the first reference signal resource via other ways, and accordingly perform measurement and reporting.

In some embodiments, the names of information, etc. are not limited to the names recorded in the embodiments, and terms such as "information", "message", "signal", "signaling", "report", "configuration", "indication", "instruction", "command", "channel", "parameter", "domain", "field", "symbol", "symbol(code element)", "codebook", "codeword", "codepoint", "bit", "data", "program", and "chip" may be used interchangeably.

At step S2102, the terminal 101 performs measurement based on the first reference signal resource.

In some embodiments, the terminal 101 performs measurement on the CSI-RS based on the first reference signal resource.

Optionally, the terminal 101 measures an arrival time of a corresponding CSI-RS based on the first reference signal resource. The arrival time of the CSI-RS may be referred to as a time when the CSI-RS arrives at the terminal, or may be a time when the terminal receives the CSI-RS. It should be understood that performing measurement based on the first reference signal resource may also be understood as performing measurement on the first reference signal resource. By performing measurement on a reference signal resource, an arrival time of a reference signal on the reference signal resource may be obtained. Since there may be a plurality of reference signal resources, a difference (i.e., an arrival time difference) between arrival times of the reference signals on the plurality of reference signal resources may be obtained, and the arrival time difference may be represented by time difference information.

In some embodiments, the terminal 101 performs measurement based on the first reference signal resource including one CMR, in which the one CMR includes a plurality of reference signal resources.

For example, the terminal 101 performs measurement based on the first reference signal resource including one CMR, in which the one CMR includes a plurality of CSI-RS resources.

At step S2103, the terminal 101 determines first CSI.

In some embodiments, the terminal 101 determines the first CSI by performing reference signal measurement based on the first reference signal resource.

Optionally, the terminal 101 determines the first CSI by performing measurement on a CSI-RS based on the first reference signal resource.

In some embodiments, the first CSI includes time difference information.

Optionally, the time difference information indicates a time difference between arrivals of CSI-RSs on different reference signal resources at the terminal.

In some embodiments, content included in the first CSI may be configured by CSI report configuration (CSI report config) information, in which the CSI report configuration information is sent by the network device 102 to the terminal 101.

Optionally, the terminal 101 receives the CSI report configuration information sent by the network device 102, in which the CSI report configuration information is used to configure the first CSI to include the time difference information.

After obtaining the time difference information, the terminal may notify the network device of the time difference information. Specifically, reporting the time difference information to the network device may also be performed based on configuration information issued by the network device. For example, the network device may send the CSI report configuration information to the terminal, and the terminal reports the time difference information based on the CSI report configuration information.

In some embodiments, the time difference information indicates a time difference between arrivals of a reference signal on a second reference signal resource and a reference signal on a third reference signal resource at the terminal.

Optionally, the third reference signal resource is a reference signal resource among the plurality of reference signal resources, and the second reference signal resource is another reference signal resource other than the third reference signal resource among the plurality of reference signal resources.

In some embodiments, in a case that the first reference signal resource includes a CMR and the CMR includes a plurality of reference signal resources, the third reference signal resource is a reference signal resource among the plurality of reference signal resources included in the CMR. It should be understood that the time difference information reported by the terminal may indicate a difference among the plurality of reference signal resources. For example, the time difference may be time differences between a reference signal resource used as a reference among the plurality of reference signal resources and other reference signal resources relative to the reference signal resource used as the reference.

For example, the first reference signal resource includes a CMR, the CMR includes a plurality of CSI-RS resources, and the third reference signal resource is one of the plurality of CSI-RS resources, for example, a first CSI-RS resource.

In some embodiments, in a case that the first reference signal resource includes a CMR and the CMR includes a plurality of reference signal resources, the second reference signal resource is a reference signal resource other than the third reference signal resource among the plurality of reference signal resources included in the CMR.

For example, the first reference signal resource includes a CMR, the CMR includes a plurality of CSI-RS resources, and the third reference signal resource is one of the plurality of CSI-RS resources, for example, a first CSI-RS resource. The second reference signal resource is a reference signal resource other than the third reference signal resource among the plurality of CSI-RS resources, for example, a second CSI-RS resource, and the second CSI-RS resource is different from the first CSI-RS resource.

In some embodiments, the third reference signal resource is determined by using at least one of the following manners: determining based on first indication information; determining based on a reference signal resource identifier; or determining based on a reference signal resource corresponding to a first reference signal.

That is, the reference signal resource used as a reference may be determined by using a plurality of manners, and may be determined by the network device or autonomously determined by the terminal.

In some embodiments, determining based on the first indication information includes: determining, based on the first indication information, the third reference signal resource among the plurality of reference signal resources.

Optionally, the first indication information is sent by the network device 102. The first indication information indicates the third reference signal resource.

For example, in connection with the embodiment where the first reference signal resource includes a CMR and the CMR includes a plurality of CSI-RS resources, the first indication information indicates that one resource among the plurality of CSI-RS resources is the third reference signal resource. For example, the first indication information indicates that a first CSI-RS resource is the third reference signal resource.

In some embodiments, determining based on the reference signal resource identifier includes: determination based on a magnitude of the reference signal resource identifier.

Optionally, a reference signal resource with a smallest reference signal resource identifier among the plurality of reference signal resources is determined as the third reference signal resource.

For example, in connection with the embodiment where the first reference signal resource includes a CMR and the CMR includes a plurality of CSI-RS resources, assuming that among the plurality of CSI-RS resources, a CSI-RS resource with a smallest identifier is a first CSI-RS resource, the first CSI-RS resource is determined as the third reference signal resource.

In some embodiments, a reference signal resource corresponding to a first reference signal is determined as the third reference signal resource, in which the first reference signal is an earliest arrived CSI-RS.

Optionally, the first reference signal is obtained by measurement by the terminal 101.

For example, in connection with the embodiment where the first reference signal resource includes a CMR and the CMR includes a plurality of CSI-RS resources, the terminal 101 obtains an earliest CSI-RS arriving at the terminal 101 by measurement, and if a CSI-RS resource corresponding to the earliest CSI-RS arriving at the terminal 101 is a first resource, the first resource is determined as the third reference signal resource.

In some embodiments, the first CSI further includes a third reference signal resource identifier.

For example, in connection with the embodiment where the first reference signal resource includes a CMR and the CMR includes a plurality of CSI-RS resources, the terminal 101 obtains an earliest CSI-RS arriving at the terminal 101 by measurement, and if a CSI-RS resource corresponding to the earliest CSI-RS arriving at the terminal 101 is a first resource, the first resource is determined as the third reference signal resource. Then, when reporting a time difference, the terminal needs to report a third reference signal resource identifier.

In some embodiments, the first CSI further includes a second reference signal resource identifier.

For example, after the terminal determines the third reference signal resource, a time difference between a reference signal on the second reference signal resource and a reference signal on the third reference signal resource is obtained, and the first CSI further includes a second reference signal resource identifier corresponding to each time difference.

In some embodiments, the second reference signal resource identifier and the time difference have a one-to-one correspondence relationship.

For example, in connection with the above embodiments, after the terminal determines the third reference signal resource, a time difference between a reference signal on the second reference signal resource and a reference signal on the third reference signal resource is obtained. Since the second reference signal resource is a reference signal resource other than the third reference signal resource among the plurality of reference signal resources, each second reference signal resource has a one-to-one corresponding time difference with the third reference signal resource. Thus, the second reference signal resource identifier and the time difference have a one-to-one correspondence relationship.

Thus, it may be obtained that, in some embodiments, the third reference signal resource is determined by using at least one of the following A to C:
A. determining, based on first indication information sent by the network device 102, the third reference signal resource among the plurality of reference signal resources, in which the first indication information indicates the third reference signal resource;
B. determining a reference signal resource with a smallest reference signal resource identifier among the plurality of reference signal resources as the third reference signal resource; or
C. determining a reference signal resource corresponding to a first reference signal as the third reference signal resource, in which the first reference signal is an earliest arrived CSI-RS.

In some embodiments, the time difference may include: a time interval between time domain positions corresponding to different CSI-RSs, or not include a time interval between time domain positions corresponding to different CSI-RSs.

For example, in a case that the time difference includes the time interval between time domain positions corresponding to different CSI-RSs, it may be understood as: two CSI-RSs, such as a CSI-RS #1 and a CSI-RS #2, correspond to a CSI-RS resource 1 and a CSI-RS resource 2 respectively. The time domain position of the CSI-RS resource 1 is symbol #0 of slot #1, and the time domain position of the CSI-RS resource 2 is symbol #0 of slot #2. It is assumed that the terminal measures that an arrival time of CSI-RS #1 is t1, and an arrival time of CSI-RS #2 is t2.

It may be understood that the time t1 is a period after symbol #0 of slot #1, and the time t2 is a period after symbol #0 of slot #2, so the time difference is t2-t1, and the period t2-t1 includes not only a time interval between symbol #0 of slot #2 and symbol #0 of slot #1 but also a difference in transmission times of two RSs from their respective TRPs to a UE.

For example, in a case that the time difference does not include the time interval between time domain positions corresponding to different CSI-RSs, it may be understood as: slot positions and symbol positions corresponding to respective CSI-RS resources of different CSI-RSs are not considered (or it is considered that the slots and the symbols corresponding to different CSI-RSs are the same). Two CSI-RSs, such as a CSI-RS #1 and a CSI-RS #2, correspond to a CSI-RS resource 1 and a CSI-RS resource 2 respectively. The time domain position of the CSI-RS resource 1 is symbol #0 of slot #1, and the time domain position of the CSI-RS resource 2 is symbol #0 of slot #2. It is assumed that the terminal measures that an arrival time of CSI-RS #1 is t1, and an arrival time of CSI-RS #2 is t2.

It may be understood that the time t1 is a period after symbol #0 of slot #1, and the time t2 is a period after symbol #0 of slot #2. Therefore, the period t2 - t1 includes not only a time interval between symbol #0 of slot #2 and symbol #0 of slot #1 but also a difference in transmission times of two RSs from their respective TRPs to the UE. If the time difference does not include a time interval between time domain positions corresponding to different CSI-RSs, the time difference is a value obtained by subtracting, from t2-t1, the time interval between symbol #0 of slot #2 and symbol #0 of slot #1.

In some embodiments, the time interval between time domain positions corresponding to different CSI-RSs may be one or more of: a slot interval between different CSI-RSs; or a symbol interval between different CSI-RSs.

In some embodiments, a value of the time difference satisfies the following conditions: greater than or equal to 1 slot, and/or greater than or equal to 1 symbol.

For example, when the time difference includes the time interval between time domain positions corresponding to different CSI-RSs, the time difference may be greater than or equal to 1 slot, and/or greater than or equal to 1 symbol.

In some embodiments, a value of the time difference is less than one symbol.

For example, when the time difference does not include the time interval between time domain positions corresponding to different CSI-RSs, the time difference may be less than 1 symbol.

In some embodiments, the value of the time difference may be a positive number or a negative number.

For example, when the reference signal on the third reference signal resource is not the earliest arrived reference signal, the time difference may be a negative value.

In some embodiments, in a case that the time difference does not include the time interval between time domain positions corresponding to different CSI-RSs, influencing factors of the time difference include at least one of: positions of TRPs corresponding to different CSI-RSs; or propagation paths corresponding to different CSI-RSs.

It may be understood that arrival times of CSI-RSs of TRPs at different positions at the terminal are different. For example, the farther a TRP is from the terminal, the later the corresponding CSI-RS arrives at the terminal. Thus, the time differences may represent position differences of different TRPs.

Similarly, arrival times of CSI-RSs corresponding to different propagation paths at the terminal are also different. Thus, the time differences may represent different propagation paths of CSI-RSs.

It should be noted that, in a case that the time interval between time domain positions corresponding to different CSI-RSs is 0 (for example, a slot interval between different CSI-RSs is 0, or a symbol interval between different CSI-RSs is 0), this case may be regarded as a case that the time difference does not include the time interval between time domain positions corresponding to different CSI-RSs, and the time difference is represented in the above manner.

In some embodiments, the terms such as "moment", "time point", "time", and "time position" may be used interchangeably, and terms such as "duration", "time period", "time window", "window", and "time" may be used interchangeably.

In some embodiments, the terms such as "frame", "radio frame", "subframe", "slot", "sub-slot", "mini-slot", "symbol", "symbol(code element)", and "transmission time interval (TTI)" may be used interchangeably.

At step S2104, the terminal 101 reports the first CSI.

In some embodiments, the terminal 101 sends the first CSI.

In some embodiments, the terminal 101 sends the first CSI to the network device 102.

In some embodiments, reporting the first CSI by the terminal 101 includes at least one of: reporting the time difference information; or reporting a code point, in which a first mapping relationship exists between the code point and the piece of time difference information.

For example, the terminal 101 may directly report the time difference via the first CSI, and/or report a code point via the first CSI. Since a correspondence relationship exists between the code point and the time difference value, indirect reporting of the time difference may be achieved.

In some embodiments, reporting the first CSI by the terminal includes at least one of: a third reference signal resource identifier, or a second reference signal resource identifier.

Optionally, the first mapping relationship is configured by the network device 102.

In some embodiments, the first mapping relationship is configured by the network device 102 based on at least one of: a CP; or an SCS.

Optionally, different SCSs correspond to different first mapping relationships.

Optionally, different CP lengths correspond to different first mapping relationships.

For example, in a case that the SCS is a kHz, a time difference value corresponding to a code point #0 is 1. Based on this, a first mapping relationship between the SCS of a kHz and the code point #0 may be obtained, which is assumed to be "f (a)". In a case that the SCS is b kHz, a time difference value corresponding to the code point #0 is 2. Based on this, a first mapping relationship between the SCS of b kHz and code point #0 may be obtained, which is assumed to be "f (b)", in which "a" and "b" are not equal. Since the same code point #0 corresponds to different time difference values under different first mapping relationships, "f (a)" is different from "f (b)". That is, different SCSs correspond to different first mapping relationships.

Optionally, it may be defined that the larger a value of the SCS is, the smaller a time difference value obtained under a first mapping relationship corresponding to the SCS for the same code point is.

It may be understood that, for the case that different CP lengths correspond to different first mapping relationships, reference may also be made to the above example enumeration of the SCS, and for avoiding repetition, it is not enumerated herein.

Optionally, it may be defined that the larger a value of a CP length is, the larger a time difference value obtained under a first mapping relationship corresponding to the CP length for the same code point is.

In some embodiments, the first CSI and other CSI are included in different CSI reports.

The other CSI includes at least one of: a CQI, a PMI, an RI, a CRI, an LI, an L1-RSRP, an L1-SINR, a Doppler shift, a Doppler spread, an average delay, a delay spread, or TDCP.

In some embodiments, the PMI includes: a first information field and a second information field. The first information field includes a wideband PMI, and the second information field includes a wideband PMI or a subband PMI.

In some embodiments, the terminal 101 reports the first CSI based on at least one of: periodic reporting, aperiodic reporting, or semi-persistent reporting.

Optionally, in a case that the terminal 101 reports the first CSI based on the periodic reporting, a sending time configuration may be based on an RRC configuration.

For example, an RRC signaling may be used for at least one of: configuring a period, and a start offset value; or configuring a time interval, and a start sending position.

Optionally, reporting the first CSI based on the semi-persistent sending includes at least one of: activation using a MAC CE, or deactivation using a MAC CE.

Optionally, reporting the first CSI based on the aperiodic reporting, including: triggering based on DCI.

In some embodiments, a reporting mode of the first CSI includes at least one of: a single PUCCH transmission, a single PUSCH transmission, a plurality of PUCCH transmissions, or a plurality of PUSCH transmissions.

In some embodiments, the first CSI may be reported to one TRP or a plurality of TRPs.

In some embodiments, for reporting the first CSI to one TRP, the reporting is performed via at least one of: a single PUCCH transmission, or a single PUSCH transmission.

It may be understood that, in a case of multi-TRP CJT, reporting the first CSI to one TRP may be that the first CSI is transmitted to a corresponding network device via the one TRP, so that the network device corresponding to the one TRP obtains the time difference. Alternatively, the one TRP transmits the first CSI to network devices corresponding to other TRPs among the plurality of TRPs, so that the network devices corresponding to the other TRPs obtain the time difference.

Optionally, for reporting the first CSI to the plurality of TRPs, the reporting may be performed via at least one of: a plurality of PUCCH transmissions or a plurality of PUSCH transmissions.

In some embodiments, the terms such as "codebook", "codeword" and "precoding matrix" may be used interchangeably. For example, a codebook may be a collection of one or more codewords/precoding matrices.

In some embodiments, the terms such as "up link", "uplink", "physical uplink" may be used interchangeably. The terms such as "down link", "downlink", "physical downlink" may be used interchangeably. The terms such as "side", "sidelink", "side communication", "sidelink communication", "direct", "direct link", "direct communication", "direct link communication" may be used interchangeably.

In some embodiments, the terms such as "synchronization signal (SS)", "synchronization signal block (SSB)", "reference signal (RS)", "pilot", and "pilot signal" may be used interchangeably.

In some embodiments, the terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", and "panel" may be used interchangeably.

In some embodiments, the terms such as "certain", "predetermined", "preset", "set", "indicated", "a", "any", "first", or the like may be used interchangeable. "Certain A", "predetermined A", "preset A", "set A", "indicated A", "an A", "any A", "first A" may be interpreted as A predefined in a protocol, or as A obtained via setting, configuration, or indication, or as certain A, an A, any A, or first A, etc., but is not limited herein.

The method in embodiments of the disclosure may include at least one of steps S2101 to S2104. For example, the step S2101 may be performed as an independent embodiment; the step S2102 may be performed as an independent embodiment; the step S2103 may be performed as an independent embodiment; the step S2104 may be performed as an independent embodiment; the step S2101 and the step S2102 may be performed as an independent embodiment; the step S2103 and the step S2104 may be performed as an independent embodiment; the step S2101, the step S2102 and the step S2103 may be performed as an independent embodiment; the step S2101, the step S2102, the step S2103 and the step S2104 may be performed as an independent embodiment, which is not limited herein.

In some embodiments, the step S2101 and the step S2104 may be exchanged in order or performed simultaneously; the step S2102 and the step S2103 may be exchanged in order or performed simultaneously; the step S2101 and the step S2103 may be exchanged in order or performed simultaneously.

In some embodiments, the step S2101, the step S2102 and the step S2103 are optional steps, and one or more of the steps may be omitted or substituted in different embodiments.

In some embodiments, the step S2101, the step S2103 and the step S2104 are optional steps, and one or more of the steps may be omitted or substituted in different embodiments.

In some embodiments, the step S2101, the step S2102 and the step S2104 are optional steps, and one or more of the steps may be omitted or substituted in different embodiments.

In some embodiments, the step S2102, the step S2103 and the step S2104 are optional steps, and one or more of the steps may be omitted or substituted in different embodiments.

In some embodiments, reference may be made to other optional implementations described before or after the embodiments corresponding to FIG. 2.

FIG. 3A is a flowchart illustrating a method for reporting CSI according to an embodiment of the disclosure. As shown in FIG. 3A, embodiments of the disclosure relate to a method for reporting CSI, and the method includes the following steps S3101 to S3104.

At step S3101, a first reference signal resource is obtained.

For an optional implementation of step S3101, reference may be made to an optional implementation of step S2101 in FIG. 2 and other related parts in the embodiments involved in FIG. 2, which is not repeated herein.

In some embodiments, a terminal 101 receives the first reference signal resource sent by an access network device 102, but is not limited herein, and may also receive the first reference signal resource sent by other subjects.

In some embodiments, the terminal 101 obtains the first reference signal resource specified by a protocol.

In some embodiments, the terminal 101 obtains the first reference signal resource from upper layer(s).

In some embodiments, the terminal 101 obtains the first reference signal resource by performing processing.

In some embodiments, step S3101 is omitted, and the terminal 101 autonomously implements the function indicated by the first reference signal resource, or the above function is default or by default.

At step S3102, measurement is performed based on the first reference signal resource.

For an optional implementation of step S3102, reference may be made to an optional implementation of step S2102 in FIG. 2 and other related parts in the embodiments involved in FIG. 2, which is not repeated herein.

At step S3103, first CSI is determined.

For an optional implementation of step S3103, reference may be made to an optional implementation of step S2103 in FIG. 2 and other related parts in the embodiments involved in FIG. 2, which is not repeated herein.

At step S3104, the first CSI is reported.

For an optional implementation of step S3104, reference may be made to an optional implementation of step S2104 in FIG. 2 and other related parts in the embodiments involved in FIG. 2, which is not repeated herein.

The method in embodiments of the disclosure may include at least one of steps S3101 to S3104. For example, the step S3101 may be performed as an independent embodiment; the step S3102 may be performed as an independent embodiment; the step S3103 may be performed as an independent embodiment; the step S3104 may be performed as an independent embodiment; the step S3101 and the step S3102 may be performed as an independent embodiment; the step S3103 and the step S3104 may be performed as an independent embodiment; the step S3101, the step S3102 and the step S3103 may be performed as an independent embodiment; the step S3101, the step S3102, the step S3103 and the step S3104 may be performed as an independent embodiment, which is not limited herein.

In some embodiments, the step S3101 and the step S3104 may be exchanged in order or performed simultaneously; the step S3102 and the step S3103 may be exchanged in order or performed simultaneously; the step S3101 and the step S3103 may be exchanged in order or performed simultaneously.

In some embodiments, the step S3101, the step S3102 and the step S3103 are optional steps, and one or more of the steps may be omitted or substituted in different embodiments.

In some embodiments, the step S3101, the step S3103 and the step S3104 are optional steps, and one or more of the steps may be omitted or substituted in different embodiments.

In some embodiments, the step S3101, the step S3102 and the step S3104 are optional steps, and one or more of the steps may be omitted or substituted in different embodiments.

In some embodiments, the step S3102, the step S3103 and the step S3104 are optional steps, and one or more of the steps may be omitted or substituted in different embodiments.

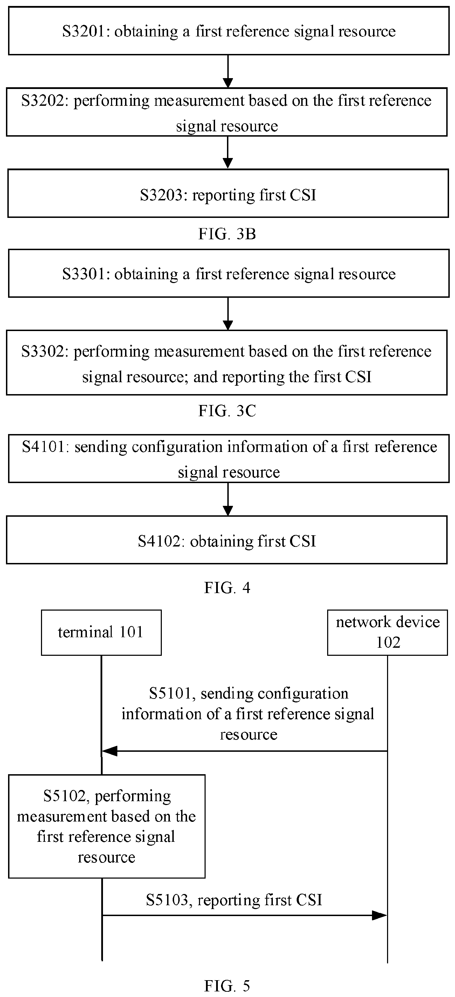

FIG. 3B is a flowchart illustrating a method for reporting CSI according to an embodiment of the disclosure. As shown in FIG. 3B, embodiments of the disclosure relate to a method for reporting CSI, and the method includes the following steps S3201 to S3203.

At step S3201, a first reference signal resource is obtained.

For an optional implementation of step S3201, reference may be made to an optional implementation of step S2101 in FIG. 2, an optional implementation of step S3101 in FIG. 3A, and other related parts in the embodiments involved in FIG. 2 and FIG. 3A, which is not repeated herein.

At step S3202, measurement is performed based on the first reference signal resource.

For an optional implementation of step S3202, reference may be made to step S2102 and step S2103 in FIG. 2, an optional implementation of step S3101 and step S3102 in FIG. 3A, and other related parts in the embodiments involved in FIG. 2 and FIG. 3A, which is not repeated herein.

At step S3203, first CSI is reported.

For an optional implementation of step S3203, reference may be made to an optional implementation of step S2104 in FIG. 2, an optional implementation of step S3104 in FIG. 3A, and other related parts in the embodiments involved in FIG. 2 and FIG. 3A, which is not repeated herein.

The method in embodiments of the disclosure may include at least one of steps S3201 to S3203. For example, the step S3201 may be performed as an independent embodiment; the step S3202 may be performed as an independent embodiment; the step S3203 may be performed as an independent embodiment; the step S3201 and the step S3202 may be performed as an independent embodiment; the step S3201 and the step S3203 may be performed as an independent embodiment; the step S3201, the step S3202 and the step S3203 may be performed as an independent embodiment, which is not limited herein.

In some embodiments, the step S3202 and the step S3203 may be exchanged in order or performed simultaneously; the step S3201 and the step S3203 may be exchanged in order or performed simultaneously; the step S3202 and the step S3203 may be exchanged in order or performed simultaneously.

In some embodiments, the step S3201 and the step S3203 are optional steps, and one or more of the steps may be omitted or substituted in different embodiments.

In some embodiments, the step S3202 and the step S3203 are optional steps, and one or more of the steps may be omitted or substituted in different embodiments.

FIG. 3C is a flowchart illustrating a method for reporting CSI according to an embodiment of the disclosure. As shown in FIG. 3C, embodiments of the disclosure relate to a method for reporting CSI, and the method includes the following steps S3301 to S3302.

At step S3301, a first reference signal resource is obtained.

For an optional implementation of step S3301, reference may be made to an optional implementation of step S2101 in FIG. 2, an optional implementation of step S3101 in FIG. 3A, an optional implementation of step S3201 in FIG. 3B, and other related parts in the embodiments involved in FIG. 2, FIG. 3A and FIG. 3B, which is not repeated herein.

At step S3302, measurement is performed based on the first reference signal resource, and first CSI is reported.

For an optional implementation of step S3302, reference may be made to step S2102, step S2103 and step S2104 in FIG. 2, an optional implementation of step S3102, step S3103 and step S3104 in FIG. 3A, an optional implementation of step S3202 and step S3203 in FIG. 3B, and other related parts in the embodiments involved in FIG. 2, FIG. 3A and FIG. 3B, which is not repeated herein.

In some embodiments, the first CSI includes time difference information, and the time difference information indicates a time difference between arrivals of CSI-RSs on different reference signal resources at the terminal.

In some embodiments, the first reference signal resource includes a CMR, and the CMR includes a plurality of reference signal resources; the time difference information indicates a time difference between arrivals of a reference signal on a second reference signal resource and a reference signal on a third reference signal resource at the terminal, in which the third reference signal resource is a reference signal resource among the plurality of reference signal resources, and the second reference signal resource is another reference signal resource other than the third reference signal resource among the plurality of reference signal resources.

In some embodiments, the third reference signal resource is determined by using at least one of: determining, based on first indication information sent by a network device, the third reference signal resource among the plurality of reference signal resources, in which the first indication information indicates the third reference signal resource; determining a reference signal resource with a smallest reference signal resource identifier among the plurality of reference signal resources as the third reference signal resource; or determining a reference signal resource corresponding to a first reference signal as the third reference signal resource, in which the first reference signal is an earliest arrived CSI-RS.

In some embodiments, the time difference includes: a time interval between time domain positions corresponding to different CSI-RSs, and the time domain position includes at least one of: a slot position or a symbol position; or the time difference does not include a time interval between time domain positions corresponding to different CSI-RSs.

In some embodiments, reporting the first CSI includes at least one of: reporting the time difference information; or reporting a code point, in which a first mapping relationship exists between the code point and the time difference information.

In some embodiments, the method further includes: receiving second indication information sent by a network device, in which the second indication information indicates the first mapping relationship.

In some embodiments, the first mapping relationship is configured based on at least one of: a CP length, in which different CP lengths correspond to different first mapping relationships; or an SCS, in which different SCSs correspond to different first mapping relationships.

In some embodiments, the first CSI and other CSI are included in different CSI reports, and the other CSI includes at least one of: a CQI, a PMI, an RI, a CRI, an LI, an L1-RSRP, an L1-SINR, a Doppler shift, a Doppler spread, an average delay, a delay spread, or TDCP.

In some embodiments, the method further includes: receiving CSI report configuration information sent by a network device, in which the CSI report configuration information is used to configure the first CSI to include the time difference information.

In some embodiments, the first CSI is reported based on at least one of: periodic reporting, aperiodic reporting, or semi-persistent reporting.

In some embodiments, a reporting mode of the first CSI includes at least one of: a single PUCCH transmission; a single PUSCH transmission; a plurality of PUCCH transmissions; or a plurality of PUSCH transmissions.

In some embodiments, the first CSI further includes a third reference signal resource identifier.

In some embodiments, the first CSI further includes a second reference signal resource identifier; the second reference signal resource identifier and the time difference have a one-to-one correspondence relationship. In embodiments of the disclosure, step S3301 may be combined with steps S3102 to S3103 in FIG. 3A, and step S3301 may be combined with step S3202 in FIG. 3B.

FIG. 4 is a flowchart illustrating a method for reporting CSI according to an embodiment of the disclosure. As shown in FIG. 4, embodiments of the disclosure relate to a method for reporting CSI, and the method includes the following steps S4101 to S4102.

At step S4101, configuration information of a first reference signal resource is sent.

For an optional implementation of step S4101, reference may be made to an optional implementation of step S2101 in FIG. 2, an optional implementation of step S3101 in FIG. 3A, an optional implementation of step S2101 in FIG. 3B, an optional implementation of step S3301 in FIG. 3C, and other related parts in the embodiments involved in FIG. 2, FIG. 3A, FIG. 3B and FIG. 3C, which is not repeated herein.

At step S4102, first CSI is obtained.

For an optional implementation of step S4102, reference may be made to an optional implementation of step S2104 in FIG. 2, an optional implementation of step S3104 in FIG. 3A, an optional implementation of step S2103 in FIG. 3B, an optional implementation of step S3302 in FIG. 3C, and other related parts in the embodiments involved in FIG. 2, FIG. 3A, FIG. 3B and FIG. 3C, which is not repeated herein.

In some embodiments, configuration information of a first reference signal resource is sent, and the configuration information of the first reference signal resource is used to configure a first reference signal resource for a terminal; first CSI is obtained, and the first CSI is measured and reported by the terminal based on the first reference signal resource, in which the first CSI includes time difference information, and the time difference information indicates a time difference between arrivals of CSI-RSs on different reference signal resources at the terminal.

In some embodiments, the first CSI is measured and reported by the terminal based on the first reference signal resource, in which the first CSI includes time difference information, and the time difference information indicates a time difference between arrivals of CSI-RSs on different reference signal resources at the terminal.

In some embodiments, the first reference signal resource includes a CMR, and the CMR includes a plurality of reference signal resources; the time difference information indicates a time difference between arrivals of a reference signal on a second reference signal resource and a reference signal on a third reference signal resource at the terminal, in which the third reference signal resource is a reference signal resource among the plurality of reference signal resources, and the second reference signal resource is another reference signal resource other than the third reference signal resource among the plurality of reference signal resources.

In some embodiments, the third reference signal resource includes at least one of: a reference signal resource indicated by the first indication information sent by the network device; a reference signal resource with a smallest reference signal resource identifier among a plurality of reference signal resources; or a reference signal resource corresponding to a first reference signal, in which the first reference signal is an earliest arrived CSI-RS.

In some embodiments, a time interval between time domain positions corresponding to different CSI-RSs, and the time domain position includes at least one of: a slot position or a symbol position; or the time difference does not include a time interval between time domain positions corresponding to different CSI-RSs.

In some embodiments, obtaining the first CSI by the network device includes at least one of: obtaining the time difference information; or obtaining a code point, in which a first mapping relationship exists between the code point and the time difference information.

In some embodiments, the method further includes: sending second indication information, in which the second indication information indicates the first mapping relationship.

In some embodiments, the first mapping relationship is configured based on at least one of: a CP length, in which different CP lengths correspond to different first mapping relationships; or an SCS, in which different SCSs correspond to different first mapping relationships.

In some embodiments, the first CSI and other CSI are included in different CSI reports, and the other CSI includes at least one of: a CQI, a PMI, an RI, a CRI, an LI, an L1-RSRP, an L1-SINR, a Doppler shift, a Doppler spread, an average delay, a delay spread, or TDCP.

In some embodiments, the method further includes: sending CSI report configuration information, in which the CSI report configuration information is used to configure the first CSI to include the time difference information.

In some embodiments, obtaining the first CSI by the network device is based on at least one of: periodic obtaining, aperiodic obtaining, or semi-persistent obtaining.

In some embodiments, obtaining the first CSI by the network device is based on at least one of: a single PUCCH transmission; a single PUSCH transmission; a plurality of PUCCH transmissions; or a plurality of PUSCH transmissions.

In some embodiments, the first CSI further includes a third reference signal resource identifier.

In some embodiments, the first CSI further includes a second reference signal resource identifier; the second reference signal resource identifier and the time difference have a one-to-one correspondence relationship.

FIG. 5 is an interaction diagram illustrating a method for reporting CSI according to an embodiment of the disclosure. As shown in FIG. 5, embodiments of the disclosure relate to a method for reporting CSI, and the method includes the following steps S5101 to S5103.

At step S5101, a network device 102 sends configuration information of a first reference signal resource.

In some embodiments, the configuration information of the first reference signal resource is used to configure a first reference signal resource for a terminal.

For an optional implementation of step S5101, reference may be made to an optional implementation of step S2101 in FIG. 2, an optional implementation of step S3101 in FIG. 3A, an optional implementation of step S2101 in FIG. 3B, an optional implementation of step S3301 in FIG. 3C, and step S4101 in FIG. 4, and other related parts in the embodiments involved in FIG. 2, FIG. 3A, FIG. 3B, FIG. 3C and FIG. 4, which is not repeated herein.

At step S5102, the terminal 101 performs measurement based on the first reference signal resource.

For an optional implementation of step S5102, reference may be made to an optional implementation of step S2102 in FIG. 2, an optional implementation of step S3102 in FIG. 3A, an optional implementation of step S3202 in FIG. 3B, an optional implementation of step S3302 in FIG. 3C, and other related parts in the embodiments involved in FIG. 2, FIG. 3A, FIG. 3B and FIG. 3C, which is not repeated herein.

At step S5103, the terminal 101 reports first CSI.

For an optional implementation of step S5103, reference may be made to step S2103 and step S2104 in FIG. 2, an optional implementation of step S3103 and step S3104 in FIG. 3A, an optional implementation of step S3203 in FIG. 3B, an optional implementation of step S3302 in FIG. 3C, step S4102 in FIG. 4, and other related parts in the embodiments involved in FIG. 2, FIG. 3A, FIG. 3B, FIG. 3C and FIG. 4, which is not repeated herein.

In some embodiments, the above method may include the methods described in the embodiments of the communication system side, the terminal side, the network device side, and the like, which is not repeated herein.

Embodiments of the disclosure further provide a method for reporting CSI. The method is used for, in a case that there is no ideal synchronization and no ideal backhaul link among a plurality of TRPs, in order to enable transmissions of a plurality of TRPs to arrive at a UE side simultaneously or within a CP range, proposing that the terminal reports arrival time differences of different TRPs, thus ensuring the performance of multi-TRP joint transmission.

In some embodiments, the terminal receives a reference signal resource configuration, performs measurement based on the reference signal resource configuration, and reports first CSI, in which the first CSI includes a time difference between different CSI-RS resources.

In some embodiments, the reference signal resource includes one CMR, and the one CMR includes a plurality of CSI-RS resources.

In some embodiments, a reference CSI-RS resource is determined based on at least one of: based on a base station indication; or based on terminal reporting.

Optionally, the reference CSI-RS resource being determined based on the base station indication may include at least one of: based on an explicit indication, or based on an implicit indication.

For example, the reference CSI-RS resource being determined based on the explicit indication may mean that the base station indicates which one of the plurality of CSI-RS resources included in the CMR is the reference CSI-RS resource; and the reference CSI-RS resource being determined based on the implicit indication may refer to indicating a CSI-RS resource with a smallest identifier among the CSI-RS resources as the reference CSI-RS resource.

Optionally, the reference CSI-RS resource being determined based on the terminal reporting may refer to the terminal determining, via measurement, a CSI-RS resource corresponding to an earliest arrived CSI-RS as a reference resource (i.e., a reference CSI-RS resource).

In some embodiments, after the reference CSI-RS resource is determined, a difference between an arrival time of an RS on another CSI-RS resource and an arrival time of an RS on the reference CSI-RS resource is reported.

In some embodiments, the arrival time difference is defined as a time difference between arrivals of two different RSs at the terminal side.

Optionally, the time difference is defined based on at least one of the following ways: a way that the arrival time may consider slot and symbol positions corresponding to the two RSs, i.e., the arrival time further includes an influence brought by a difference between the slot and symbol positions corresponding to the CSI-RS resources; or a way that the arrival time may not consider the slot and symbol positions corresponding to the two RSs, i.e., it is assumed that the slot and symbol positions corresponding to the two RSs are the same, and only an arrival time difference caused by different positions or propagation paths of the two TRPs is included.

In some embodiments, the time difference is reported or a code point is reported, and the code point has a correspondence relationship with a time difference value.

Optionally, the base station configures a correspondence relationship between a reported code point and a time difference value.

Optionally, for different CP lengths and/or different SCSs, the correspondence relationship between the code point and the time difference value is different.

For example, a time difference value 1 corresponding to a code point #0 when the SCS is 15 kHz is twice a time difference value 2 corresponding to the code point #0 when the SCS is 30 kHz.

It may be understood that, when the CP is larger, a time difference value corresponding to the same code point is also larger.

In some embodiments, the first CSI is configured and reported based on a CSI feedback framework, and is configured to report a time difference.

Optionally, the first CSI and at least one of the following are included in different CSI reports (reported independently): a CQI, a PMI, an RI, a CRI, an LI, an L1-RSRP, an L1-SINR, a Doppler shift, a Doppler spread, an average delay, a delay spread, or TDCP.

Optionally, the PMI includes at least one of: an X1 information field, or an X2 information field.

The X1 information field includes a wideband PMI, which includes at least one of: a first codebook index (i1).

The first codebook index includes at least one of the following.

The i1 includes i_{1,1} (related to N1 and O1, in which N1 is a number of antenna ports in a first dimension, and O1 is an oversampling factor or a number of beams in the first dimension) and i_{1,2} (related to N2 and O2, in which N2 is a number of antenna ports in a second dimension, and O2 is an oversampling factor or a number of beams in the second dimension);

The i1 includes i_{1,1} (related to N1 and O1, in which N1 is a number of antenna ports in a first dimension, and O1 is an oversampling factor or a number of beams in the first dimension), i_{1,2} (related to N2 and O2, in which N2 is a number of antenna ports in a second dimension, and O2 is an oversampling factor or a number of beams in the second dimension), and i_{1,3} (in a case that RANK > 1, i.e., in a case that a number of layers is greater than 1, i_{1,3} is mainly used for determining antenna ports among different layers);

The i1 includes i_{1,1}, i_{1,2} and i_{1,4} (used for different panels), in which i_{1,4} includes at least one of i_{1,4,1}, i_{1,4,2} or i_{1,4,3}, and i_{1,4,1}, i_{1,4,2} and i_{1,4,3} respectively correspond to different panels, and/or fine-grained phase adjustment.

Optionally, the X2 information field includes a wideband PMI, or each subband PMI, including one of: i2, i2, 0, i2, 1, i2, 2.

In some embodiments, the time difference may be reported to one TRP or reported to two TRPs, and is reported to the two TRPs based on an M-TRP PUCCH/PUSCH transmission mechanism.

In some embodiments, the terminal receives CSI report configuration information, and determines that a report quantity is the time difference.

In some embodiments, a reporting time configuration for the first CSI is reported based on at least one of: periodic reporting, aperiodic reporting, or semi-persistent reporting.

Optionally, a time configuration for periodic sending may be based on an RRC signaling configuration, and its configuration manner is as follows: configuring a period and a start offset value, or configuring a time interval and a start sending position.

Optionally, for the semi-persistent reporting/sending, in addition to the RRC signaling configuration, activation or deactivation of a MAC CE is also required.

It may be understood that the RRC signaling configuration is the same as above, and the MAC CE may activate to start sending the first CSI. The MAC CE may indicate an ID of a configuration parameter of the first CSI.

Optionally, the first CSI is fed back aperiodically, and needs to be triggered by DCI.

In embodiments of the disclosure, some or all of the steps and the optional implementations may be arbitrarily combined with some or all of the steps in other embodiments, or may also be arbitrarily combined with optional implementations of other embodiments.

Embodiments of the disclosure also provide an apparatus for implementing any one of the above methods. For example, an apparatus is provided, including units or modules for performing the steps executed by the terminal in any one of the above methods. For example, another apparatus is provided, including units or modules for performing the steps executed by the network device (e.g., an access network device, a core network node, a core network device, etc.) in any one of the above methods.

It should be understood that a division of units or modules in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

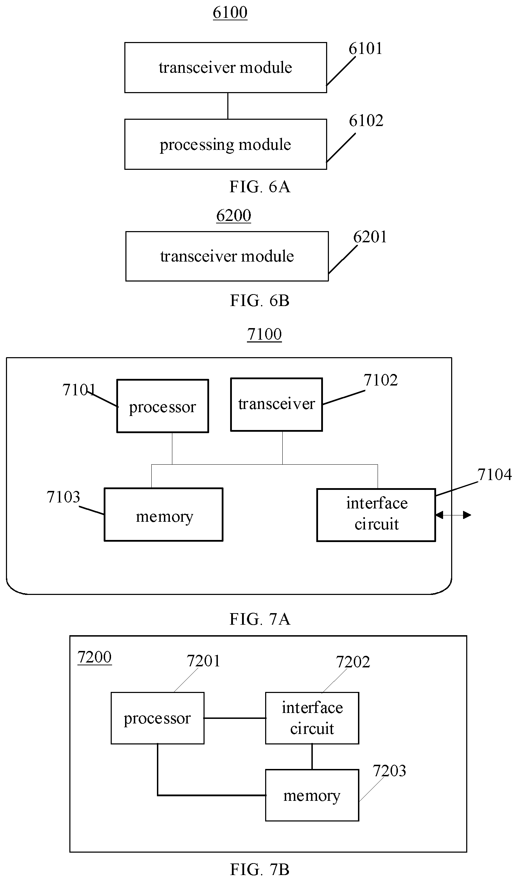

FIG. 6A is a block diagram illustrating a terminal according to an embodiment of the disclosure. As shown in FIG. 6A, the terminal 6100 may include at least one of: a transceiver module 6101, a processing module 6102, or the like. In some embodiments, the transceiver module 6101 is configured to obtain a first reference signal resource, in which the first CSI includes time difference information, and the time difference information indicates a time difference between arrivals of CSI-RSs on different reference signal resources at the terminal. Alternatively, the transceiver module 6101 may be configured to perform at least one of the communication steps (e.g., S2101, S2104, but is not limited herein) such as sending and/or receiving performed by the terminal 6100 in any of the above methods, which is not repeated herein. Alternatively, the processing module 6102 is configured to perform at least one of the other steps (e.g., S2102, S2103, but is not limited herein) performed by the terminal 6100 in any of the above methods, which is not repeated herein.

FIG. 6B is a block diagram illustrating a network device according to an embodiment of the disclosure. As shown in FIG. 6B, the network device 6200 may include: a transceiver module 6201. In some embodiments, the transceiver module 6201 is configured to send configuration information of a first reference signal resource, and is further configured to obtain first CSI, in which the first CSI is measured and reported by the terminal based on the first reference signal resource, and the first CSI includes time difference information, and the time difference information indicates a time difference between arrivals of CSI-RSs on different reference signal resources at the terminal. Alternatively, the transceiver module 6201 is configured to perform at least one of the communication steps (e.g., S2101, S2104, but is not limited herein) such as sending and/or receiving performed by the network device 102 in any of the above methods, which is not repeated herein.

FIG. 7A is a block diagram illustrating a communication device 7100 according to an embodiment of the disclosure. The communication device 7100 may be a network device (such as an access network device, a core network device, etc.), or a terminal (such as a UE, etc.), or a chip, a chip system, a processor, etc. that supports the network device to implement any one of the methods, or a chip, a chip system, a processor, etc. that supports the terminal to implement any one of the methods. The communication device 7100 may be configured to implement the method in the above method embodiments. For details, reference may be made to the description in the above method embodiments.

As shown in FIG. 7A, the communication device 7100 may include one or more processors 7101. The processor 7101 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute programs, and process program data. The communication device 7100 is configured to execute any one of the above methods. Optionally, the one or more processors 7101 are configured to invoke instructions to cause the communication device 7100 to perform any of the above methods.

In some embodiments, the communication device 7100 further includes one or more transceivers 7102. When the communication device 7100 includes one or more transceivers 7102, the transceiver 7102 performs at least one of the communication steps (e.g., S2101, S2103, but is not limited herein) such as sending and/or receiving in the above method, and the processor 7101 performs at least one of other steps (e.g., S2101, but is not limited herein). In optional embodiments, the transceiver may include a receiver and/or a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

Optionally, the communication device 7100 further includes one or more memories 7103 for storing instructions. Optionally, all or some of the memories 7103 may also be located outside the communication device 7100. In optional embodiments, the communication device 7100 may include one or more interface circuits 7104. Optionally, the interface circuit 7104 is connected to the memory 7103. The interface circuit 7104 may be configured to receive signals from the memory 7103 or other devices, and may be configured to send signals to the memory 7103 or other devices. For example, the interface circuit 7104 may read instructions stored in the memory 7103 and send the instructions to the processor 7101.

The communication device 7100 in the above embodiments may be a network device or a terminal, but a scope of the communication device 7100 in the disclosure is not limited to this, and a structure of the communication device 7100 may not be limited by FIG. 7A. The communication device may be an independent device or a part of a larger device. For example, the communication device may be: 1) an independent IC, or a chip, or a chip system or a subsystem; 2) a collection including one or more IC, optionally, the IC collection may also include storage components for storing data and computer programs; 3) an ASIC, such as a modem; 4) modules embedded in other devices; 5) a receiver, an IoT device, an intelligent IoT device, a cellular phone, a wireless device, a handheld phone, a mobile unit, a vehicle-mounted device, a network device, a cloud device, an artificial intelligence device, etc.; 6) others.

FIG. 7B is a block diagram illustrating a chip 7200 according to an embodiment of the disclosure. For a case where the communication device 7100 may be a chip or a chip system, reference may be made to the block diagram of the chip 7200 shown in FIG. 7B, but not limited to this.

The chip 7200 includes one or more processors 7201. The chip 7200 is configured to execute any one of the above methods.

In some embodiments, the chip 7200 further includes one or more interface circuits 7202. Optionally, terms such as interface circuit, interface, transceiver pin, transceiver, etc. may be used interchangeably. In some embodiments, the chip 7200 further includes one or more memories 7203 for storing instructions. Optionally, all or some of the memories 7203 may be located outside the chip 7200. Optionally, the interface circuit 7202 is connected to a memory 7203. The interface circuit 7202 may be configured to receive signals from the memory 7203 or other devices, and may be configured to send signals to the memory 7203 or other devices. For example, the interface circuit 7202 may read the instructions stored in the memory 7203 and send the instructions to the processor 7201.

In some embodiments, the interface circuit 7202 performs at least one of the communication steps such as sending and/or receiving in the above method (e.g., S2102, S2103, but is not limited herein). The interface circuit 7202 performing communication steps such as sending and/or receiving in the above method means that, for example, the interface circuit 7202 performs data interaction between the processor 7201, the chip 7200, the memory 7203, or a transceiver device. In some embodiments, the processor 7201 performs at least one of other steps (e.g., S2101, but is not limited herein).

In various embodiments of virtual devices, physical devices, chips, and the like, the modules and/or components described may be arbitrarily combined or separated as required. Optionally, some or all steps may also be executed collaboratively by multiple modules and/or components, and no specific limitations are imposed herein.

The disclosure also provides a storage medium for storing instructions. When the instructions are running on the communication device 7100, the communication device 7100 is caused to implement any one of the above methods. Optionally, the above storage medium is an electronic storage medium. Optionally, the above storage medium is a computer-readable storage medium, which is not limited to this, and the above storage medium may also be a storage medium readable by other devices. Optionally, the above storage medium may be a non-transitory storage medium, which is not limited to this, and the above storage medium may also be a transitory storage medium.

The disclosure also provides a program product. When the program product is executed by the communication device 7100, the communication device 7100 is caused to implement any one of the above methods. Optionally, the above program product is a computer program product.

The disclosure also provides a computer program. When the computer program is running on a computer, the computer is caused to implement any one of the above methods.

## Claims

1. A method for reporting channel state information (CSI), performed by a terminal, comprising:
obtaining a first reference signal resource;
obtaining first CSI by performing measurement based on the first reference signal resource; and
reporting the first CSI,
wherein the first CSI comprises time difference information, and the time difference information indicates a time difference between arrivals of CSI reference signals (CSI-RSs) on different reference signal resources at the terminal.

2. The method according to claim 1, wherein the first reference signal resource comprises a channel measurement resource (CMR), and the CMR comprises a plurality of reference signal resources;
the time difference information indicates a time difference between arrivals of a reference signal on a second reference signal resource and a reference signal on a third reference signal resource at the terminal;
wherein the third reference signal resource is a reference signal resource among the plurality of reference signal resources, and the second reference signal resource is another reference signal resource other than the third reference signal resource among the plurality of reference signal resources.

3. The method according to claim 2, wherein the third reference signal resource is determined by using at least one of:
determining, based on first indication information sent by a network device, the third reference signal resource among the plurality of reference signal resources, wherein the first indication information indicates the third reference signal resource;
determining a reference signal resource with a smallest reference signal resource identifier among the plurality of reference signal resources as the third reference signal resource; or
determining a reference signal resource corresponding to a first reference signal as the third reference signal resource, wherein the first reference signal is an earliest arrived CSI-RS.

4. The method according to any one of claims 1 to 3, wherein the time difference comprises: a time interval between time domain positions corresponding to different CSI-RSs, and the time domain position comprises at least one of: a slot position or a symbol position; or
the time difference does not comprise a time interval between time domain positions corresponding to different CSI-RSs.

5. The method according to any one of claims 1 to 4, wherein reporting the first CSI comprises at least one of:
reporting the time difference information; or
reporting a code point, wherein a first mapping relationship exists between the code point and the time difference information.

6. The method according to claim 5, further comprising:
receiving second indication information sent by a network device, wherein the second indication information indicates the first mapping relationship.

7. The method according to claim 6, wherein the first mapping relationship is configured based on at least one of:
a cyclic prefix (CP) length, wherein different CP lengths correspond to different first mapping relationships; or
a subcarrier spacing (SCS), wherein different SCSs correspond to different first mapping relationships.

8. The method according to any one of claims 1 to 7, wherein the first CSI and other CSI are comprised in different CSI reports, and the other CSI comprises at least one of:
a channel quality indicator (CQI);
a precoding matrix indicator (PMI);
a rank indicator (RI);
a CSI-RS resource indicator (CRI);
a layer indicator (LI);
a layer 1 reference signal received power (L1-RSRP);
a layer 1 signal to interference plus noise ratio (L1-SINR);
a Doppler shift;
a Doppler spread;
an average delay;
a delay spread; or
time domain channel properties (TDCP).

9. The method according to any one of claims 1 to 8, further comprising:
receiving CSI report configuration information sent by a network device, wherein the CSI report configuration information is used to configure the first CSI to comprise the time difference information.

10. The method according to any one of claims 1 to 9, wherein the first CSI is reported based on at least one of:
periodic reporting, aperiodic reporting, or semi-persistent reporting.

11. The method according to any one of claims 1 to 10, wherein a reporting mode of the first CSI comprises at least one of:
a single physical uplink control channel (PUCCH) transmission;
a single physical uplink shared channel (PUSCH) transmission;
a plurality of PUCCH transmissions; or
a plurality of PUSCH transmissions.

12. The method according to claim 2 or 3, wherein the first CSI further comprises a third reference signal resource identifier.

13. The method according to claim 2, 3 or 12, wherein the first CSI further comprises a second reference signal resource identifier;
the second reference signal resource identifier and the time difference have a one-to-one correspondence.

14. A method for reporting channel state information (CSI), performed by a network device, comprising:
sending configuration information of a first reference signal resource, wherein the configuration information of the first reference signal resource is used to configure a first reference signal resource for a terminal; and
obtaining first CSI, wherein the first CSI is measured and reported by the terminal based on the first reference signal resource;
the first CSI comprises time difference information, and the time difference information indicates a time difference between arrivals of CSI reference signals (CSI-RSs) on different reference signal resources at the terminal.

15. The method according to claim 14, wherein the first reference signal resource comprises a channel measurement resource (CMR), and the CMR comprises a plurality of reference signal resources;
the time difference information indicates a time difference between arrivals of a reference signal on a second reference signal resource and a reference signal on a third reference signal resource at the terminal;
wherein the third reference signal resource is a reference signal resource among the plurality of reference signal resources, and the second reference signal resource is another reference signal resource other than the third reference signal resource among the plurality of reference signal resources.

16. The method according to claim 15, wherein the third reference signal resource comprises at least one of:
a reference signal resource indicated by the first indication information sent by the network device;
a reference signal resource with a smallest reference signal resource identifier among a plurality of reference signal resources; or
a reference signal resource corresponding to a first reference signal, wherein the first reference signal is an earliest arrived CSI reference signal.

17. The method according to any one of claims 14 to 16, wherein the time difference comprises: a time interval between time domain positions corresponding to different CSI-RSs, and the time domain position comprises at least one of: a slot position or a symbol position; or
the time difference does not comprise a time interval between time domain positions corresponding to different CSI-RSs.

18. The method according to any one of claims 14 to 17, wherein obtaining the first CSI by the network device comprises at least one of:
obtaining the time difference information; or
obtaining a code point, wherein a first mapping relationship exists between the code point and the time difference information.

19. The method according to claim 18, further comprising:
sending second indication information, wherein the second indication information indicates the first mapping relationship.

20. The method according to claim 19, wherein the first mapping relationship is configured based on at least one of:
a cyclic prefix (CP) length, wherein different CP lengths correspond to different first mapping relationships; or
a subcarrier spacing (SCS), wherein different SCSs correspond to different first mapping relationships.

21. The method according to any one of claims 14 to 20, wherein the first CSI and other CSI are comprised in different CSI reports, and the other CSI comprises at least one of:
a channel quality indicator (CQI);
a precoding matrix indicator (PMI);
a rank indicator (RI);
a CSI-RS resource indicator (CRI);
a layer indicator (LI);
a layer 1 reference signal received power (L1-RSRP);
a layer 1 signal to interference plus noise ratio (L1-SINR);
a Doppler shift;
a Doppler spread;
an average delay;
a delay spread; or
time domain channel properties (TDCP).

22. The method according to any one of claims 14 to 21, further comprising:
sending CSI report configuration information, wherein the CSI report configuration information is used to configure the first CSI to comprise the time difference information.

23. The method according to any one of claims 14 to 22, wherein the first CSI is reported based on at least one of:
periodic reporting, aperiodic reporting, or semi-persistent reporting.

24. The method according to any one of claims 14 to 23, wherein obtaining the first CSI by the network device is based on at least one of:
a single physical uplink control channel (PUCCH) transmission;
a single physical uplink shared channel (PUSCH) transmission;
a plurality of PUCCH transmissions; or
a plurality of PUSCH transmissions.

25. The method according to claim 15 or 16, wherein the first CSI further comprises a third reference signal resource identifier.

26. The method according to claim 15, 16 or 25, wherein the first CSI further comprises a second reference signal resource identifier;
the second reference signal resource identifier and the time difference have a one-to-one correspondence.

27. A method for reporting channel state information (CSI), comprising:
sending, by a network device, configuration information of a first reference signal resource, wherein the configuration information of the first reference signal resource is used to configure a first reference signal resource for a terminal;
obtaining, by the terminal, first CSI by performing measurement based on the first reference signal resource, and reporting the first CSI,
wherein the first CSI comprises time difference information, and the time difference information indicates a time difference between arrivals of CSI reference signals (CSI-RSs) on different reference signal resources at the terminal; and
obtaining, by the network device, the first CSI.

28. A terminal, comprising:
a transceiver module, configured to obtain a first reference signal resource;
a processing module, configured to obtain first CSI by performing measurement based on the first reference signal resource, and report the first CSI;
wherein the first CSI comprises time difference information, and the time difference information indicates a time difference between arrivals of CSI reference signals (CSI-RSs) on different reference signal resources at the terminal.

29. A network device, comprising:
a transceiver module, configured to send configuration information of a first reference signal resource, wherein the configuration information of the first reference signal resource is used to configure a first reference signal resource for a terminal;
wherein the transceiver module is further configured to obtain first CSI, wherein the first CSI is measured and reported by the terminal based on the first reference signal resource;
the first CSI comprises time difference information, and the time difference information indicates a time difference between arrivals of CSI reference signals (CSI-RSs) on different reference signal resources at the terminal.

30. A terminal, comprising:
one or more processors;
wherein the one or more processors are configured to implement the method for reporting CSI according to any one of claims 1 to 13.

31. A network device, comprising:
one or more processors;
wherein one or more processors are configured to implement the method for reporting CSI according to any one of claims 14 to 26.

32. A communication system, comprising a terminal, configured to implement the method for reporting CSI according to any one of claims 1 to 11, and a network device, configured to implement the method for reporting CSI according to any one of claims 13 to 24.

33. A storage medium storing instructions, wherein the instructions, when executed on a communication device, cause the communication device to implement the method for reporting CSI according to any one of claims 1 to 13 or 14 to 26.
